# EUROPEAN PATENT SPECIFICATION

(11) **EP 1 744 287 B1**
(45) Date of publication and mention of the grant of the patent: **30.04.2008**
(21) Application number: 05076611.2
(22) Date of filing: 13.07.2005
(51) Int. Cl.: G07D 7/00, B42D 15/00

(54) **Methods and systems for signing physical documents and for authenticating signatures on physical documents**
Methode und System zur Signierung von physischen Dokumenten und zur Authentisierung von Signaturen auf physischen Dokumenten
Procédé et système pour signer un document physique et pour l'authentification de signatures de documents physiques

(43) Date of publication of application: 17.01.2007
(73) Proprietor: Neopost S.A., 92220 Bagneux (FR)
(72) Inventor: Wiersma, Jelle, 9222 LB Drachtster Compagnie (NL); Fijnvandraat, Hendrik Cornelis, 7513 BS Enschede (NL)
(74) Representative: Winckels, Johannes Hubertus F.

(56) References cited:
- EP-A- 0 710 934
- EP-A- 1 202 225
- WO-A-99/27503
- WO-A-02/098670
- US-A- 5 260 999
- US-A1- 2002 013 772
- US-B1- 6 886 863

## Description

### FIELD AND BACKGROUND OF THE INVENTION

The invention relates to a method and system for signing physical documents. The invention further relates to a method and system for authenticating signatures on physical documents. The invention also relates to a method for sending physical documents. The invention further relates to a computer program product. The invention also relates to a physical document provided with a signature.

It is known to provide a signature on a physical document, inter alia, to verify the origin of the physical document. To perform this function, the signature is provided on the physical document by a signing party as a handwritten mark which is unique for the signing party. Another function of the signature is to verify that the physical document is authentic. Especially for legal documents, such as contracts or wills, the signature is also used as a means of authentication of the document itself. The signature further forms a means to verify that the intentions of the signing party are expressed in the legal document. Often, the signature is provided on the first page or last page of the physical document.

However, unless all pages of a physical document are signed, it cannot be ascertained with complete certainty that a received physical document is indeed the same as the physical document signed by a sending party. Even if all pages are signed, without additional investigations, it cannot be ascertained that parts of the physical document have not been tampered with. E.g. pages could be missing or phrases of text have been modified without affecting the signature.

Hence, the known manner of signing physical documents is sensitive to fraud.

### SUMMARY OF THE INVENTION

It is a goal of the invention to provide a method and a system for signing physical documents which is more fraud-proof.

Therefore according to an aspect of the invention a method according to claim 1 is provided. Such a method is more fraud proof, because in case the document has been tampered with, for instance by modifying parts of the document content, the signature code will no longer match with the document. Accordingly, it can be ascertained that the physical document is the physical document signed by the signing party.

According to another aspect of the invention, a method for authenticating a signature according to claim 12 is provided. Such a method enables a fraud-proof authentication of the signature, since in case the document content has been tampered with or the signature has been modified, the relationship between the signature code, the content and identification code will be different. The relationship will then fail to satisfy the validation criterion and the signature will not be validated.

According to yet another aspect of the invention a method for sending physical documents according to claim 17 is provided.

According to further aspects of the invention, a system according to claim 19 and a system according to claim 20 are provided.

According to a further aspect of the invention, a computer program product according to claim 21 is provided. Furthermore, a physical document according to claim 22 is provided.

Specific embodiments of the invention are set forth in the dependent claims.

### BRIEF DESCRIPTION OF THE DRAWINGS

Further details, aspects and embodiments of the invention will be described, by way of example only, with reference to the drawings.

Fig. 1 shows a flow-chart of an example of a method for signing a physical document according to the invention.

Fig. 2 shows a flow-chart of an example of a method for authenticating a signature according to the invention.

Fig. 3 schematically shows block diagrams of examples of embodiments of a system for signing physical documents and a system for authenticating signatures.

Fig. 4 schematically shows a signed document.

### DETAILED DESCRIPTION

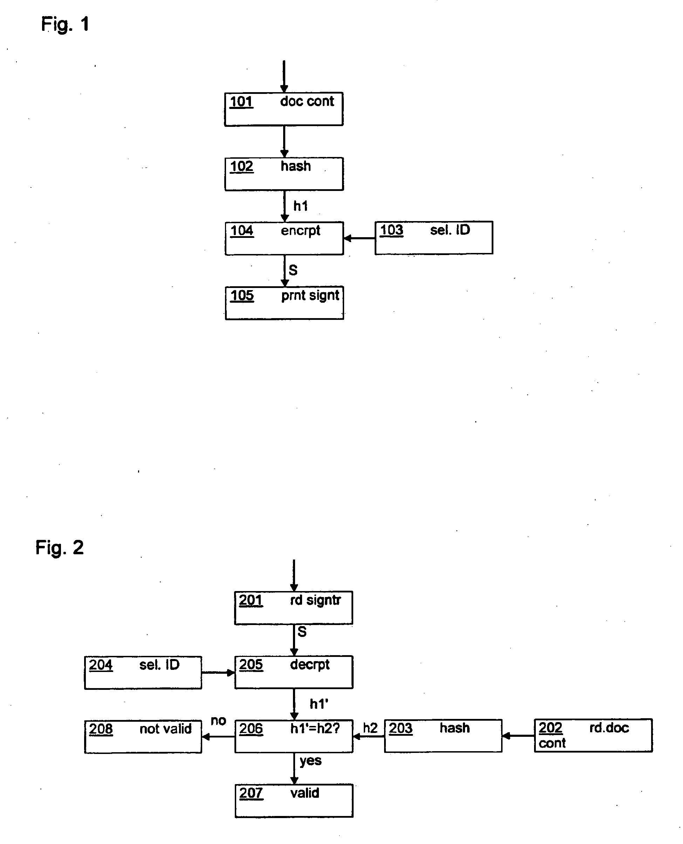

Fig. 1 schematically shows a flow-chart of an example of a method for providing a signature. The method is initiated with receiving in a first signing step 101 a document content of the physical document to be signed. For example, a data file may be received which contains data representing the document content and optionally data defining the appearance of the document.

In a second signing step 102, a document code is derived from at least a part of the content of the physical document. For example, a hash code h1 may be determined from the data in the received data file. A hash code, also referred to as a hash value, is computed from input data using some hashing algorithm. In a mathematical sense, a hash algorithm H projects a value from a set with many members to a value from a set with fewer members. In second signing step 102, for example, a Message Digest 5 (MD5) algorithm or a Secure Hash Algorithm (SHA) may be used

After the document code is derived, a fourth signing step 104 is performed. In the third signing step, a signature code S is derived from the document code and from an identification code of a signing party. In this example, the identification code ID is selected by the signing party in third signing step 103. In a fifth signing step 105, the signature code S is then provided on the physical document in the form of a signature marking which represents the signature code. Optionally, the physical document may also be provided with a document marking representing the document code h1.

After performing a method for providing a signature, such as illustrated in fig. 1 for example, the physical document can be sent to an addressee. After the physical document has been received by the addressee, a method can be performed to authenticate the physical document.

The flow-chart of fig. 2 schematically illustrates a method for authenticating a signature provided on a physical document. The method is started with a first authentication step 201. In first authentication step 201 a signature marking is detected on a physical document. The signature marking represents a signature code S. In the first authentication step 201, the signature code S is derived from the detected signature marking. For example, the signature marking may be provided on the physical document in the form of a barcode. In such case, in the first authentication step 201, the physical document 5 may be received and scanned by means of a barcode scanner. The barcode data from the barcode scanner then represent the signature code S.

In a second authentication step 202, content data representing a document content of the physical document 5 are determined from the physical documents. For example, the pages of the physical document 5 may be scanned by an optical scanner 4, and the scan data from this scanning may be processed with an optical character recognition program, yielding data representing the content of the physical document 5.

In third authentication step 203, a first document code h2 is derived from the document content. The first document code h2 may for example be derived in a manner similar to that of the second signing step 102. In the example of fig. 2, the first document code h2 is for instance derived by means of a hash operation resulting in a hash code.

In a fourth authentication step 204, an identification code ID of the signing party is selected.

In fifth and sixth authentication steps 205,206 a relationship between the signature code S, the identification code ID and the first document code is determined. The signature is validated in a seventh validation step 207 in case the relationship satisfies a validation criterion. When the relationship fails to satisfy the validation criterion, the signature is marked as not valid in a eighth validation step 208. Thus, when the document content has been tampered with, e.g. certain phrases have been removed or added, the relationship between the signature code S, the identification code ID and the first document code h2 will change and the signature will not be validated.

For example, in the fifth authentication step 205, a second document code h1' may be derived from the signature code S and the identification code ID. For instance, the signature code S may be an encrypted code which can be decrypted using the identification code ID as a key. The resulting decrypted code may then be the second document code h1'. In sixth authentication step 206, the first document code h2 may be compared with the second document code h1' and the signature may be validated in case the first document code h2 matches the second document code h1'.

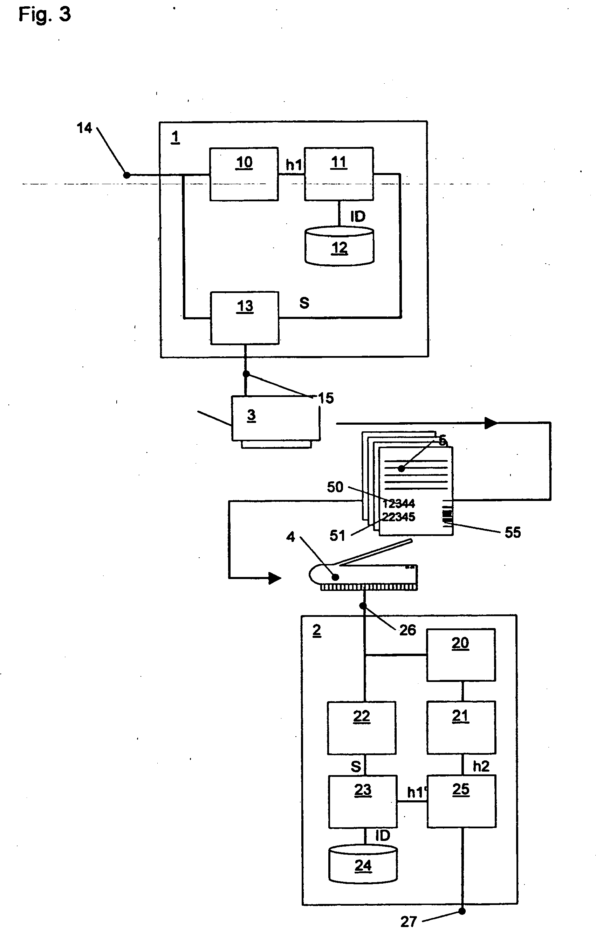

Fig. 3 schematically illustrates a system for signing a physical document. The system includes a signing system input 14 for receiving content data representing at least a document content of the physical document. The content data may for example be received as an ASCII file defining the text of the physical document. However, the content data may also represent further aspects of the physical document. The content data may for example define a content of a document and a make-up or layout of the document. In such case, the content data may for example be received as a Printer Command Language (PCL) file, a personalized printer mark-up language (PPML) file, a Postscript file, a PDF (Portable document format) file or any other suitable type of file.

The content data may be used in processing of a document and for instance be readable by a printer 3, as shown in fig. 3. After the content data has been received by the printer 3, the printer 3 may then print a physical document which has the content and make-up defined by the content data.

The signing system input 14 is connected to a processor 1. The processor 1 is arranged to derive a signature code S from the document content and an identification code ID of a signing party. The processor 1 is connected with an output 15 to the printer 3. Via the output 15, a signature marking representing the signature code S can be outputted to a printer 3 and printed on a physical document.

In the example of fig. 3, the processor 1 includes a hash unit 10 connected to the system input 14. The hash unit 10 can receive the content data and derive from the document content a document code h1. In this example, for instance, the document code h1 is derived by performing a hash operation on the content data. An output of the hash unit 10 is connected to an input of an encryption unit 11. Via the output the document code h1 can be transmitted to the encryption unit 11.

The encryption unit 11 can receive the document code h1 from the hash unit 10 at an input. Another input of the encryption unit 11 is connected to a memory 12 in which one or more identification codes are stored. In this example, the encryption unit 11 retrieves an identification code ID of the signing party from the memory 12. The signing parties identification code ID may for instance be selected automatically based on an identifier of a user of the system 1. For example in case the system is implemented on a programmable apparatus, the identification code ID may be selected depending on the login identification of a user of the programmable apparatus. However it is also possible that, the system is arranged to receive an identification code inputted manually by a signing party, for example at a man-machine interface of the system.

The encryption unit 11 derives a signature code S from the document code h1 and the identification code ID. In this example, for instance, the encryption unit 11 is arranged to encrypt the document code h1 with an encryption algorithm which uses the identification code ID. Thus, the resulting signature code S is an encrypted code which depends both on the document code h1 and the identification code ID.

In this example, the encryption unit 11 is connected with an output to a marking unit 13 which generates a signature marking which represents the signature code S. For example, the marking unit 13 may receive the signature code S and generate barcode data defining a barcode which represent the signature code S. In this example, the marking unit 13 is further connected to the system input 14. The marking unit 13 receives via the system input 14 the content data and modifies the content data by adding to the content data marking data which represents the signature marking 50.

The modified content data can be outputted by the marking unit 13 to a printer 3 via the system output 15. The printer 3 can print a physical document 5 in accordance with the data file. Since the data file includes the marking data, the printed physical document is provided with the signature marking 50. Depending on the specific implementation, the marking unit 13 may also add marking data representing other markings to the data files. For example, the marking unit 13 may add content marking data which defines a content marking 51 representing the document code or encryption marking data which defines an encryption marking containing information about the encryption scheme or any other suitable marking.

As shown in fig. 3, the physical document 5 provided with the signature marking 50, and optional additional markings 51, may be sent to an addressee. After being received by the addressee, the physical document 5 may be processed by a system for authenticating signatures in order to verify that the received document is the document signed by the signing party and to verify that the document content has not been tampered with.

Fig. 3 further shows an example of a system for authenticating signatures. The system includes a content data generator, which in this example includes a scanner 4 connected to an authentication processor input 26 of an authentication processor 2. The scanner 4 optically scans the physical document and obtains one or more images of the physical document 5. Data representing the images is presented by the scanner 4 at the input 26.

In the example of fig. 3, the authentication processor 2 includes an image processing unit 20. The image processing unit 20 is connected to the authentication processor input 26. The image processing unit 20 is arranged to perform an optical character recognition (OCR) operation. In the OCR operation, the content, e.g. text, of the physical document is determined from the images. It should be noted that OCR is generally known in the art of image processing, and for the sake of brevity is not described in further detail. Thus, the content of a physical document 5 can be derived by the scanner 4 and the image processing unit 20.In the examples, a two or more OCR operations may be performed simultaneously and the results of the OCR operations may be compared, in order to reduces the chance of errors in the OCR. The partial results of the OCR operations may be compared, i.e. after having processed a part of the physical document, thus allowing an identification of the specific part of the physical document in which the OCR error has occured. Optionally, the specific part in which the error occurred may be rescanned thereafter.

Connected to an output of the image processing unit 20 is a hash unit 21. The hash unit 21 can receive the content data from the processing unit 20 and derive from the document content a first document code h2. In this example, for instance, the document code h2 is derived by performing a hash operation on the content data. An output of the hash unit 21 is connected to an input of a comparator unit 25. At the output of the hash unit 21, the document code h2 can be presented.

A marking detector 22 is connected to the input 26. The marking detector 22 can detect a signature marking 50 in the images. The signature marking 50 may for example include a barcode marking. The marking detector 22 may then be arranged to detect a barcode in the images, and to derive data from the detected barcode marking can be determined. It should be noted that detection of barcodes is generally known in the art of image processing, and for the sake of brevity the process of detecting the signature marking and deriving the signature code from the signature marking is not described in further detail. However, the invention is not limited to signature markings formed by barcodes and other suitable markings may also be used. For instance, the signature marking may be provided on the document as (a sequence of) an alphanumeric signs, and the marking detector may be arranged to detect and recognise alphanumeric signs. The marking detector 22 further derives from the detect signature marking 50 a signature code S and outputs data representing the signature code S to a decryption unit 23.

The decryption unit 23 can derive a second document code h1' from the signature code S and from an identification code ID of a signing party stored in a memory 24. In this example for instance, the decryption unit 23 can perform a decryption operation which is substantially the reverse of the encryption operation performed by the encryption unit 11. In this example, the signature code S was obtained from an encryption operation involving the document code h1 and the identification code ID. The result of decrypting the detected signature code S is a second document code h1'. The second document code h1' can be transmitted via an output of the decryption unit 23 to an input of the comparator unit 25.

The comparator unit 25 is arranged to compare the first document code h2 with the second document code h1' and to output a validation signal at an authentication system output 27 when this comparison satisfies a validation criterion. Together with the comparator unit 25, the decryption unit 23 is thus able to determine a relationship between the signature code S, the identification code ID of a signing party and the document code and to validate the signature in case said relationship satisfies a validation criterion.

The comparator unit 25 may be implemented with any validation criterion suitable for the specific implementation. In the example of fig. 3, the comparator unit 25 outputs a validation signal if and only if the first document code and the second document code are sufficiently similar. (I.e. in case the difference between the first document code and the second document code satisfies a validation requirement).

For example, the comparator unit may output the validation signal in case the difference between the first document code h2 and the second document code h1' is below a certain threshold. For instance in the example of fig. 3, the comparator unit 25 outputs a validation signal only when the first document code h2 and the second document code h1' are exactly the same, i.e. the threshold is zero.

However, the threshold may also be larger than zero. In such case, the requirements with respect to obtaining the document content from the physical document may be lessened. Errors in the derived document content might result in a first document code h2 which differs from the second document code h1'. Accordingly, allowing a difference between the first document code h2 and the second document code h1' obviates the required accuracy level.

In a method or system according to the invention, the signature code may be derived in any suitable manner from the document code and the identification code of a signing part. For example, the signature code may be derived by encoding with an encryption algorithm which involves both the document code and the identification code. For example, the document code may be encrypted with a encryption scheme which uses the identification code as an encryption key.

The encryption scheme may for example be a symmetric encryption scheme

For example, in symmetric-key encryption, the same (secret) key is used both to decrypt and encrypt a packet of information. The identification code of the signing party may then be the key used to encrypt and decrypt the encrypted signature code. The identification code may, e.g. be known only to the signing party and be provided to the receiving party of the physical document via a separate route. The addressee of the physical document and the physical document may be provided with a marking representing an identification of the signing party, e.g. its name. A receiving party of the physical document may then look-up the key used by that party and decrypt the signature code, in order to obtain the document code. The symmetric-key scheme may for instance be a DES (Data Encryption Standard) encryption scheme, as for example specified in the ANSI (American National Standards Institute) X3.92 and X3.106 standards. Symmetric key encryption algorithms are generally known in the art of secure data transmission and for the sake of brevity not described in any further detail.

The encryption scheme may also be a public-key encryption scheme Public-key encryption uses a combination of a private key and a public key. In the examples of methods or systems for signing a physical document, the private key may be known only to the signing party, while the public key is publicly available, and may e.g. be printed on the physical document. In the example, the private key may be used to encrypt the document code, resulting in the signature code. The private key may for example be the private key of a signing party. Thereafter, the signature code is provided on the physical document as a signature marking, for example by printing alphanumeric signs representing the signature code on the physical document. A party receiving the physical document may then read the signature code and decrypt the signature code with a decrypting algorithm corresponding to the used encryption algorithm. In the decryption, a public key (mathematically related to the used private key) is used. The suitable public key may for example be printed on the physical document or be provided via a trusted third party. Public key encryption algorithms are generally known in the art of secure data transmission and for the sake of brevity not described in any further detail. Examples of suitable public key encryption algorithms, are the RSA or PKI encryption algorithms. However, other types of public-key encryption algorithms may also be used.

In a method or system according to the invention, any identification code suitable for the specific implementation may be used. The identification codes used for signing and authentication may for instance be the same. In case the same identification code is used for signing and authentication, the identification code may be known to only the signing party and the addressee, in order to ensure that the signature marking is provided by the signing party, and not a fraud.

However, the identification codes used for signing and authentication may also be different. In such case, the identification code used for signing may be kept secret by the signing party, but information may be publicly available about the identification code used for authentication. For example, the identification code used for signing may be a private key of a public key encryption and the identification code used for authentication may be a public key corresponding to this private key.

The identification code used for authentication and/or signing may be unique for a signing party, i.e. there is no other signing party using the same identification code. Thereby, the possibility to commit fraud with a physical document is reduced further, since the only party which can provide the signature is the signing party. However, for instance, in case the identification code is known only to the signing party and the addressee, the identification code may be not unique for the signing party.

The document code generated from (a part of) the document content may be unique for the specific content of the physical content. Thus, if the content of a physical document has been tampered with, the document code determined from the content during authentication will always differ from the document code used to derive the signature code.

However, the document code may lack uniqueness. For example, a document code may be derived which could be the same for a number of document contents. For instance, in the example of figs. 1 and 2, a hash algorithm may be used in second signing step 102. The hash algorithm may for example be a one-way hash function. A one-way hash function is a hash function which maps an arbitrary length message M to a fixed length message digest or hash code MD via an operation MD=H(M), and given M and MD, it is hard, however not impossible, to find a message N different from message M such that H(N)=H(M). For example, there may be a small chance that two messages have the same hash code. This small chance may for example be lower than or equal to 10⁻⁶, such as lower than or equal to 10⁻⁹. However, the hash code may also be unique for the specific document content.

During signing of the physical document or authentication of the signature , the document code and/or document content may be derived in any manner suitable for the specific implementation. For example, print data may be received which represents a document content to be printed, and optionally represents definitions of the appearance of a document with this document content. The print data may for instance be readable by a printer 3, such that a printed document 5 contains the content represented by the print data (and, optionally, has the appearance defined by the print data). The document code may then be derived from at least a part of the received print data. For example, all the received print data may be used as input for a hash operation. Also, for example, only the part of the received data which represents the document content can be used. For instance, a print file may include commands representing the document content and commands representing the layout of the document to be printed. The commands representing the document content may then be used to determine the document code.

For example, using pseudo-code, a print file may contain the commands:
**font:** arial (defining the type of font)
**font size:** 11 pt (defining the size of the font)
**text position:** 11,11 (defining the position on the page at which the text starts)
**text:** aaabbbbccc
   In a system or method according to the invention, the print file may then be searched for commands of the type 'text' and the characters following the command may be used to the determine the content.

The signature marking may be provided on the physical document in any suitable manner. For example, the signature marking may be provided on the physical document when the physical document is printed. For example, marking print data may be generated from the signature code which defines the appearance of the signature marking, and which can be read by a printer. The marking print data may for example be added to the print data causing a physical document printed in accordance with the print data to have a marking in accordance with the marking print data.

However, the signature marking may also be provided before or after printing the physical document. For example, after printing the physical document, a separate signature printing operation may be performed. From the signature code, signature print data may be generated which can be read by a printer and defines the appearance of the signature marking. The signature print data may then be sent to a printer which print the signature marking onto the physical document.

The signature code may be derived from a single document code and from the identification code. For example, in case a single document code is derived from the entire document content. However, the signature code may also be derived from two or more document codes. For example, a first document code may be derived from a first part of the document content of the physical document. A second document code may be derived from a second part (different from the first part) of the document content of the physical document etc. Thereby, in addition to detecting modifications to the content of the physical document, also the specific part (e.g. the first or the second) which has been tampered with can be determined. The first part and the second part may for example be on different pages of the physical document or be different sections of a text, e.g. different clauses of a contract. The signature code may for instance be derived from at least two parts of the document content on different pages.

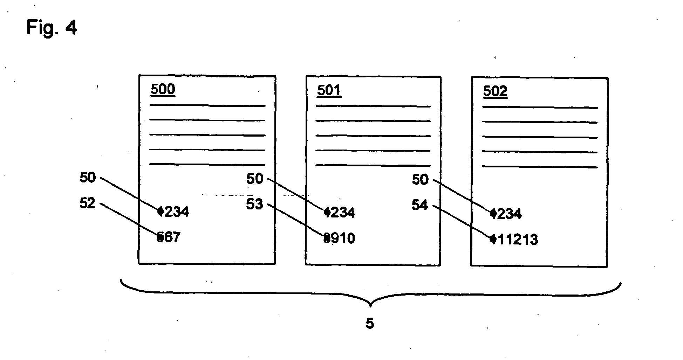

Furthermore, more than one signature marking may be provided to (different parts of) a physical document. For instance the example of fig. 4, for each of a number of pages of a physical document a signature code has been derived from a document code determined from the content of a page and the identification code of the signing party. In fig. 4, each sheet 500-502 of the physical document 5 has been provided with a signature marking 50 representing a signature code derived from the content of a number of pages, e.g. the whole document, and a page marking 52-54 representing a signature code derived from the content of a single page.

The signature code may further contain information about a data and/or time and/or place of signing the physical document. For example, the signature code may include a table with two or more codes derived from the identification code and respectively, the document code, a date code representing the date and a place code representing the place of signing the physical document. For example, the signature code may be derived by encrypting a character string with the identification code. For example, the string may include, in that order, a number of characters representing the document code, a number of characters representing the date and characters representing the place. The character string may then, for example, have a fixed length, and/or the different types of information may occupy a predetermined position in the string. Thereby, it can be determined in a simple manner which character in the string belongs to, e.g., the document code, the data code or the place code.

As mentioned, in addition to the signature marking, additional markings may also be provided. For example, when signing the physical document a document marking representing the document code may be provided on the physical document. The additional markings may include, an identification marking representing the identification code to be used in the authentication or an encryption marking representing information about the encryption process. During authentication, the document marking and/or identification marking provided on the physical document may then be detected, and the code represented by the marking determined. In case a document marking is provided, during authentication, a third document code may be derived from the document marking. The signature may then be deemed valid if and only if the third document code and/or the second document code and/or the first document code are sufficiently similar.

As shown in fig. 3, for example, a barcode marking 55 may be provided on the physical document 5 representing the third document code, while the signature marking 50 is provided by means of alphanumeric signs on the physical document 5. From the barcode marking 55, the third document code may be derived, and, for example, be used to determined whether or not the determination of the first document code was correct. When the third document code differs from the first document code, the content of the physical document may be determined again. When the first and third document code are the same, the first document code may be compared with the second document code to detect any tampering with the physical document

In case the addition marking is an encryption marking, deriving a second document code h1' during authentication of the signature may include deriving information about a suitable decrypting scheme from a marking on the physical document. Thereafter the signature code can be decrypted with a suitable decrypting scheme.

The invention may further be embodied in a physical document provided with a signature marking representing a signature code, which signature code is derivable from at least a part of the content of the physical document and from an identification code specific for a signing party. The physical document to be signed or to be authenticated may be any suitable physical document. The physical document may for instance be a legal document, such as a contract or a will. However, the physical document may also be of a different kind

The invention is not limited to implementation in the disclosed examples of devices, but can likewise be applied in other devices. In particular, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while logically regarded as a single device. For example, the processor 1 of the system for signing physical documents shown in fig. 3 may be physically implemented as a number of hardware devices arranged to perform the functions of the processor. Also, devices logically regarded as separate devices may be integrated in a single physical device. For example, the units 20-25 of the system shown in fig. 3 can be implemented in a single processor able to perform the functions of the respective units.

The invention may also be implemented in a computer program for running on a computer system, at least including code portions for performing steps of a method according to the invention when run on a programmable apparatus, such as a computer system or enabling a programmable apparatus to perform functions of a device according to the invention. Such a computer program may be tangible embodied in a data carrier, such as a CD-ROM or diskette, stored with data loadable in a memory of a computer system, the data representing the computer program or any other type of article of manufacture suitable for the specific implementation. The data carrier may further be a data connection, such as a telephone cable or a wireless connection transmitting signals representing a computer program according to the invention.

In the foregoing specification, the invention has been described with reference to specific examples of embodiments of the invention. However, various modifications and changes may be made. For example, the signature marking or other markings may be provided on the physical document in any manner suitable for the specific implementation, and may for example include 1D or 2D barcodes, alphanumeric signs or other suitable markings. The specifications and drawings are, accordingly, to be regarded in an illustrative rather than in a restrictive sense.

## Claims

1. A method for providing physical documents with a signature, including:
deriving a document code from at least a part of a content of the physical document; deriving a signature code at least from the document code and from an identification code of a signing party;
providing the physical document with a signature marking representing the signature code;
and, optionally, providing the physical document with a document marking representing the document code.

2. A method according to claim 1, wherein the document code is unique for the specific content of the physical content, and/or the identification code is unique for a specific signing party.

3. A method according to claim 1 or 2 , wherein deriving the document code includes:
receiving print data representing at least a document content to be printed and
deriving the document code from at least a part of the received print data;
and wherein providing the physical document with a signature marking representing the signature code and/or providing the physical document with a document marking representing the document code includes:
adding marking data to the print data, which marking data define the signature marking and/or the document marking; and
printing the physical document in accordance with the print data.

4. A method according to any one of the preceding claims, including:
receiving print data representing at least a document content to be printed;
printing a physical document in accordance with the print data; and
providing the physical document after said printing with the signature marking and/or the document marking.

5. A method according to claim 3, wherein the signature code is derived from at least a first document code, a second document code and the identification code, and the method including:
deriving the first document code from a first part of the document content of the physical document, and deriving the second document code from a second part of the document content of the physical document, which second part is different from the first part.

6. A method according to any one of the preceding claims, further including:
receiving the identification code via an interface or retrieving the identification code from a non-volatile memory

7. A method according to any one of the preceding claims, further including selecting the identification code, for example depending on a user and/or a processing instruction of the physical document.

8. A method according to any one of the preceding claims, wherein the signature code is derived from at least two parts of the document content on different pages.

9. A method according to any one of the preceding claims, wherein the signature code includes an encrypted code and wherein deriving the signature code includes:
obtaining the encrypted code by encrypting the document code with an encryption scheme, optionally said encrypting depending on at least the identification code; and
optionally providing the physical document with a encryption marking, which encryption marking represents information about the encryption scheme.

10. A method according to claim 9, wherein the encryption scheme includes a public key encryption scheme, and the identification code includes a private key of the public key encryption scheme and, optionally, said method further including: providing a public key marking to the physical document representing a public key corresponding to the private key.

11. A method according to any one of the preceding claims, wherein the signature code is at least partially derived from data representing a time and/or a place of signing the physical document.

12. A method for authenticating a signature provided on a physical document, including:
detecting a signature marking provided on the physical document, which signature marking represents a signature code;
deriving the signature code from the detected signature marking;
deriving a first document code from content data derived from the physical document; determining a relationship between the signature code, an identification code of a signing party and the first document code and validating the signature in case said relationship satisfies a validation criterion.

13. A method according to claim 12, including:
deriving a second document code from the signature code and the identification code;
in which method said determining a relationship includes comparing the first document code and the second document code; and
in which method the signature is validated if and only if the first document code and the second document code are sufficiently similar.

14. A method according to claim 13, further including:
detecting a document marking provided on the physical document, which document marking represents a third document code;
deriving the third document code from the document marking;
in which method said determining a relationship includes:
comparing the third document code with at least one of the first document code and the second document code; and
in which method the signature is validated if and only if the third document code is sufficiently similar to the second document code and/or the first document code.

15. A method according to any one of claim 12-14, wherein the signature code includes an encrypted code and said deriving a second document code includes:
decrypting the encrypted code with a suitable decryption scheme, optionally selecting said decryption scheme depending on the identification code,
and, optionally, deriving information about a suitable decrypting scheme from a marking on the physical document.

16. A method according to claim 15, wherein said decrypting scheme is a public key decrypting scheme, wherein the identification code is a public key of said public key encryption scheme and, optionally, including deriving said public key from a marking on the physical document.

17. A method for sending physical documents, including:
performing a method as claimed in any one of claims 1-11;
sending the physical document to an addressee;
receiving the physical document by the addressee;
performing a method as claimed in any one of claims 12-16.

18. A method according to any one of the preceding claims, wherein the physical document is a legal document, such as a contract or a will.

19. A system for signing physical document including:
an input for receiving a document content of the physical document;
a processor in contact with the input, for deriving a document code from at least a part of the document content, and deriving a signature code from the document code and an identification code of a signing party; and
an output for providing a signature marking representing the signature code on the physical document.

20. A system for authenticating signatures, including:
a detector for detecting a signature marking provided on the physical document, which signature marking represents a signature code;
a processor connected to the detector, which processor includes a first input for receiving data representing at least a part of the content of the physical document and
a second input for receiving data representing an identification code of a signing party, and which processor is arranged for:
deriving a document code from the content of the physical document; and
determining a relationship between the signature code, the identification code and the document code and outputting a validation signal in case said relationship satisfies a validation criterion.

21. A computer program product including program code portions for performing a method as claimed in any one of claims 1-18, when run on a programmable apparatus.

22. A physical document provided with a signature marking representing a signature code, which signature code is derivable from at least a part of the content of the physical document and from an identification code specific for a signing party.

## Patentansprüche

1. Verfahren zum Versehen von physischen Dokumenten mit einer Signatur, umfassend:
das Ableiten eines Dokumentcodes von zumindest einem Teil eines Inhalts des physischen Dokuments;
das Ableiten eines Signaturcodes zumindest von dem Dokumentcode und von einem ldentifizierungscode einer unterzeichnenden Partei;
das Versehen des physischen Dokuments mit einer Signaturmarkierung, die den Signaturcode darstellt, und
das optionale Versehen des physischen Dokuments mit einer Dokumentmarkierung, die den Dokumentcode darstellt.

2. Verfahren nach Anspruch 1, wobei der Dokumentcode einmalig ist für den speziellen Inhalt des physischen Inhalts und/oder wobei der Identifizierungscode einmalig ist für eine spezielle unterzeichnende Partei.

3. Verfahren nach Anspruch 1 oder 2, wobei das Ableiten des Dokumentcodes umfasst:
das Empfangen von Druckdaten, die zumindest einen zu druckenden Dokumentinhalt darstellen, und das Ableiten des Dokumentcodes von zumindest einem Teil der empfangenen Druckdaten;
und wobei das Versehen des physischen Dokuments mit einer die Signatur darstellenden Signaturmarkierung und/oder das Versehen des physischen Dokuments mit einer den Dokumentcode darstellenden Dokumentmarkierung umfasst:
das Hinzufügen von Markierungsdaten zu den Druckdaten, wobei die Markierungsdaten die Signaturmarkierung und/oder die Dokumentmarkierung definieren; und
das Drucken des physischen Dokuments gemäß den Druckdaten.

4. Verfahren nach einem der vorhergehenden Ansprüche, umfassend:
das Empfangen von Druckdaten, die zumindest einen zu druckenden Dokumentinhalt darstellen;
Drucken eines physischen Dokuments gemäß den Druckdaten; und
Versehen des physischen Dokuments nach dem Drucken mit der Signaturmarkierung und/oder der Dokumentmarkierung.

5. Verfahren nach Anspruch 3, wobei der Signaturcode von zumindest einem ersten Dokumentcode, einem zweiten Dokumentcode und dem Identifizierungscode abgeleitet wird und wobei das Verfahren umfasst:
das Ableiten des ersten Dokumentcodes von einem ersten Teil des Dokumentinhalts des physischen Dokuments und das Ableiten des zweiten Dokumentcodes von einem zweiten Teil des Dokumentinhalts des physischen Dokuments, wobei sich der zweite Teil von dem ersten Teil unterscheidet.

6. Verfahren nach einem der vorhergehenden Ansprüche, ferner umfassend:
das Empfangen des ldentifizierungscodes über ein Interface oder das Abrufen des Identifizierungscodes aus einem nichtflüchtigen Speicher.

7. Verfahren nach einem der vorhergehenden Ansprüche, ferner umfassend:
das Auswählen des Identifizierungscodes zum Beispiel abhängig von einem Benutzer und/oder von einem Verarbeitungsbefehl für das physische Dokument.

8. Verfahren nach einem der vorhergehenden Ansprüche, wobei der Signaturcode von zumindest zwei Teilen des Dokumentinhalts auf verschiedenen Seiten abgeleitet wird.

9. Verfahren nach einem der vorhergehenden Ansprüche, wobei der Signaturcode einen verschlüsselten Code enthält und wobei das Ableiten des Signaturcodes umfasst:
das Erlangen des verschlüsselten Codes durch ein Verschlüsseln des Dokumentcodes mit einem Verschlüsselungsschema, wobei die Verschlüsselung optional von zumindest dem Identifizierungscode abhängig ist; und
das optionale Versehen des physischen Dokuments mit einer Verschlüsselungsmarkierung, wobei die Verschlüsselungsmarkierung Informationen über das Verschlüsselungsschema darstellt.

10. Verfahren nach Anspruch 9, wobei das Verschlüsselungsschema ein Verschlüsselungsschema mit einem öffentlichen Schlüssel enthält und wobei der Identifizierungscode einen privaten Schlüssel des Verschlüsselungsschemas mit öffentlichem Schlüssel enthält und wobei das Verfahren optional ferner umfasst: das Versehen des physischen Dokuments mit der Markierung eines öffentlichen Schlüssels, die einen dem privaten Schlüssel entsprechenden öffentlichen Schlüssel darstellt.

11. Verfahren nach einem der vorhergehenden Ansprüche, wobei der Signaturcode zumindest teilweise von Daten abgeleitet wird, die ein Datum und/oder einen Ort der Unterzeichnung des physischen Dokuments darstellen.

12. Verfahren zum Authentifizieren einer auf einem physischen Dokument angebrachten Signatur, umfassend:
das Detektieren einer auf einem physischen Dokument angebrachten Signaturmarkierung, wobei die Signaturmarkierung einen Signaturcode darstellt;
das Ableiten des Signaturcodes von der detektierten Signaturmarkierung; das Ableiten eines ersten Dokumentcodes von Inhaltsdaten, die von dem physischen Dokument abgeleitet wurden;
das Bestimmen einer Relation zwischen dem Signaturcode, einem Identifizierungscode einer unterzeichnenden Partei und dem ersten Dokumentcode und das Validieren der Signatur für den Fall, dass die Relation ein Validierungskriterium erfüllt.

13. Verfahren nach Anspruch 12, umfassend:
das Ableiten eines zweiten Dokumentcodes von dem Signaturcode und
dem Identifizierungscode; wobei in diesem Verfahren die Bestimmung einer Relation das Vergleichen des ersten Dokumentcodes und des zweiten Dokumentcodes umfasst; und
wobei in diesem Verfahren die Signatur dann und nur dann validiert wird, wenn der erste Dokumentcode und der zweite Dokumentcode ausreichend ähnlich sind.

14. Verfahren nach Anspruch 13, ferner umfassend:
das Erfassen einer Dokumentmarkierung, die auf einem physischen Dokument vorgesehen ist, wobei die Dokumentmarkierung einen dritten Dokumentcode darstellt;
das Ableiten des dritten Dokumentcodes von der Dokumentmarkierung; wobei in diesem Verfahren die Bestimmung einer Relation umfasst:
das Vergleichen des dritten Dokumentcodes mit zumindest einem des ersten und des zweiten Dokumentcodes; und
wobei in diesem Verfahren die Signatur dann und nur dann validiert wird, wenn der dritte Dokumentcode dem zweiten Dokumentcode und/oder dem ersten Dokumentcode ausreichend ähnlich ist.

15. Verfahren nach einem der Ansprüche 12 bis 14, wobei der Signaturcode einen verschlüsselten Code enthält und wobei das Ableiten eines zweiten Dokumentcodes umfasst:
das Entschlüsseln des verschlüsselten Codes mit einem geeigneten Entschlüsselungsschema, das optionale Wählen des Entschlüsselungsschemas abhängig von dem Identifizierungscode und
das optionale Ableiten von Informationen über ein geeignetes Entschlüsselungsschema von einer Markierung auf dem physischen Dokument.

16. Verfahren nach Anspruch 15, wobei das Entschlüsselungsschema ein Entschlüsselungsschema mit öffentlichem Schlüssel ist, wobei der Identifizierungscode ein öffentlicher Schlüssel des Verschlüsselungsschemas mit öffentlichem Schlüssel ist und wobei das Verfahren optional das Ableiten des öffentlichen Schlüssels von einer Markierung auf dem physischen Dokument umfasst.

17. Verfahren zum Senden physischer Dokumente, umfassend:
das Durchführen eines Verfahrens gemäß einem der Ansprüche 1 bis 11; das Senden des physischen Dokuments an einen Adressaten;
das Empfangen des physischen Dokuments von dem Adressaten;
das Durchführen eines Verfahrens gemäß einem der Ansprüche 12 bis 16.

18. Verfahren nach einem der vorhergehenden Ansprüche, wobei das physische Dokument ein juristisches Dokument ist, wie zum Beispiel ein Vertrag oder ein Testament.

19. System zum Signieren physischer Dokumente, umfassend:
einen Eingang zum Empfangen eines Dokumentinhalts des physischen Dokuments;
einen sich mit dem Eingang in Kontakt befindenden Prozessor zum Ableiten eines Dokumentcodes von zumindest einem Teil des Dokumentinhalts und zum Ableiten eines Signaturcodes von dem Dokumentcode und einem ldentifizierungscode von einer unterzeichnenden Partei; und
einen Ausgang für die Lieferung einer Signaturmarkierung, die den Signaturcode auf dem physischen Dokument darstellt.

20. System zur Authentifizierung von Signaturen, umfassend:
einen Detektor für das Detektieren einer auf dem physischen Dokument angebrachten Signaturmarkierung., wobei die Signaturmarkierung einen Signaturcode darstellt;
einen mit dem Detektor verbundenen Prozessor, der einen ersten Eingang für den Empfang von Daten aufweist, die zumindest einen Teil des Inhalts des physischen Dokuments darstellen, und einen zweiten Eingang für den Empfang von Daten, die einen Identifizierungscode einer unterzeichnenden Partei darstellen, wobei der Prozessor geeignet ist für:
das Ableiten eines Dokumentcodes von dem Inhalt des physischen Dokuments; und für das Bestimmen einer Relation zwischen dem Signaturcode, dem Identifizierungscode und dem Dokumentcode und für die Ausgabe eines Validierungssignals für den Fall, dass die Relation ein Validierungskriterium erfüllt.

21. Computerprogrammprodukt, enthaltend Programmcodebereiche für die Durchführung eines Verfahrens gemäß einem der Ansprüche 1 bis 18, wenn das Programm auf einer programmierbaren Vorrichtung ausgeführt wird.

22. Physisches Dokument, das mit einer Signaturmarkierung versehen ist, die einen Signaturcode darstellt, wobei der Signaturcode von zumindest einem Teil des Inhalts des physischen Dokuments und von einem Identifizierungscode speziell für eine unterzeichnende Partei abgeleitet werden kann.

## Revendications

1. Procédé pour fournir des documents physiques avec une signature, consistant à :
dériver un code de document d'au moins une partie d'un contenu du document physique ;
dériver un code de signature au moins du code de document et d'un code d'identification d'une partie qui signe ;
fournir le document physique avec une marque de signature représentant le code de signature ;
et, éventuellement, fournir le document principal avec une marque de document représentant le code de document.

2. Procédé selon la revendication 1, dans lequel le code de document est unique pour le contenu spécifique du contenu physique, et/ou le code d'identification est unique pour une partie qui signe spécifique.

3. Procédé selon la revendication 1 ou 2, dans lequel dériver le code de document consiste à :
recevoir des données d'impression représentant au moins un contenu de document à imprimer et dériver le code de document à partir d'au moins une partie des données d'impression reçues ;
et dans lequel fournir le document physique avec une marque de signature représentant le code de signature et/ou fournir le document physique avec une marque de document représentant le code de document consiste à :
ajouter des données de marque aux données d'impression, lesquelles données de marque définissent la marque de signature et/ou la marque du document, et
imprimer le document physique conformément aux données d'impression.

4. Procédé selon une quelconque des revendications précédentes, consistant à :
recevoir des données d'impression représentant au moins un contenu de document à imprimer ;
imprimer un document physique conformément aux données d'impression ; et
fournir le document physique après ladite impression avec la marque de signature et/ou la marque de document.

5. Procédé selon la revendication 3, dans lequel le code de signature est dérivé d'au moins un premier code de document, un second code de document et le code d'identification, et le procédé consistant à :
dériver le premier code de document à partir d'une première partie du contenu du document physique, et dériver le second code de document à partir d'une seconde partie du contenu du document physique, laquelle seconde partie est différente de la première partie.

6. Procédé selon une quelconque des revendications précédentes, consistant de plus à :
recevoir le code d'identification via une interface ou récupérer le code d'identification à partir d'une mémoire rémanente.

7. Procédé selon une quelconque des revendications précédentes, consistant de plus à choisir le code d'identification, par exemple selon un utilisateur et/ou une instruction de traitement du document physique.

8. Procédé selon une quelconque des revendications précédentes, dans lequel le code de signature est dérivé d'au moins deux parties du contenu du document sur des pages différentes.

9. Procédé selon une quelconque des revendications précédentes, dans lequel le code de signature comporte un code crypté et dans lequel dériver le code de signature consiste à :
obtenir le code crypté par cryptage du code du document avec un système de cryptage ou de chiffrement, éventuellement ledit cryptage dépendant au moins du code d'identification; et fournir éventuellement le document principal avec une marque de cryptage, laquelle marque de cryptage représente des informations en ce qui concerne le système de cryptage.

10. Procédé selon la revendication 9, dans lequel le système de cryptage comporte un système de cryptage à clé publique, et le code d'identification comporte une clé privée du système de cryptage à clé publique et, éventuellement, ledit procédé consistant de plus à : fournir une marque à clé publique au document physique représentant une clé publique correspondant à la clé privée.

11. Procédé selon une quelconque des revendications précédentes, dans lequel le code de signature est au moins partiellement dérivé de données représentant un temps et/ou un emplacement de signature du document physique.

12. Procédé pour authentifier une signature apposée sur un document physique, consistant à :
détecter une marque de signature prévue sur le document physique, laquelle marque de signature représente un code de signature ;
dériver le code de signature à partir de la marque de signature détectée ;
dériver un premier code de document à partir de données de contenu dérivées du document physique ;
déterminer une relation entre le code de signature, un code d'identification d'une partie qui signe et le premier code de document et valider la signature dans le cas où ladite relation satisfait à un critère de validation.

13. Procédé selon la revendication 12, consistant à :
dériver un second code de document du code de signature et du code d'identification ;
dans lequel procédé, ladite détermination d'une relation consiste à comparer le premier code de document et le second code de document ; et
dans lequel procédé, la signature est validée si et seulement si le premier code de document et le second code de document sont suffisamment similaires.

14. Procédé selon la revendication 13, consistant de plus à :
détecter une marque de document prévue sur le document physique, laquelle marque de document représente un troisième code de document;
dériver le troisième code de document de la marque de document ;
dans lequel procédé, ladite détermination d'une relation consiste à :
comparer le troisième code de document avec au moins l'un du premier code de document et du deuxième code de document ; et
dans lequel procédé, la signature est validée si et seulement si le troisième code de document est suffisamment similaire au deuxième code de document et/ou au premier code de document.

15. Procédé selon une quelconque des revendications 12-14, dans lequel le code de signature comporte un code crypté et dériver un deuxième code de document consiste à :
décrypter le code crypté avec un système de décryptage approprié, sélectionner éventuellement ledit système de décryptage selon le code d'identification,
et, éventuellement, dériver des informations en ce qui concerne un système de décryptage approprié à partir d'une marque sur le document physique.

16. Procédé selon la revendication 15, dans lequel ledit système de décryptage est un système de décryptage à clé publique, dans lequel le code d'identification est une clé publique dudit système de cryptage à clé publique et, éventuellement, consistant à dériver ladite clé publique à partir d'une marque sur le document physique.

17. Procédé pour envoyer des documents physiques, consistant à :
réaliser un procédé de la manière revendiquée dans une quelconque des revendications 1-11 ;
envoyer le document physique à un destinataire ;
recevoir le document physique par le destinataire ;
réaliser un procédé de la manière revendiquée dans une quelconque des revendications 12-16.

18. Procédé selon une quelconque des revendications précédentes, dans lequel le document physique est un document légal, tel qu'un contrat ou un testament.

19. Système pour signer un document physique comportant :
une entrée pour recevoir un contenu du document physique ;
un processeur en contact avec l'entrée, pour dériver un code de document à partir d'au moins une partie du contenu du document, et dériver un code de signature à partir du code de document et d'un code d'identification d'une partie qui signe, et
une sortie pour fournir une marque de signature représentant le code de signature sur le document physique.

20. Système pour authentifier des signatures, comportant :
un détecteur pour détecter une marque de signature prévue sur le document physique, laquelle marque de signature représente un code de signature ;
un processeur relié au détecteur, lequel processeur comporte une première entrée pour recevoir des données représentant au moins une partie du contenu du document physique et une seconde entrée pour recevoir des données représentant un code d'identification d'une partie qui signe, et lequel processeur est conçu pour :
dériver un code de document à partir du contenu du document physique ; et
déterminer une relation entre le code de signature, le code d'identification et le code de document et délivrer un signal de validation dans le cas où ladite relation satisfait à un critère de validation.

21. Produit programme informatique comportant des parties de code de programme pour réaliser un procédé de la manière revendiquée dans une quelconque des revendications 1-18, quand il s'exécute sur un appareil programmable.

22. Document physique muni d'une marque de signature représentant un code de signature, lequel code de signature peut être dérivé d'au moins une partie du contenu du document physique et d'un code d'identification spécifique à une partie qui signe.
